# EUROPÄISCHE PATENTSCHRIFT

(11) **EP 0 422 531 B1**
(45) Veröffentlichungstag und Bekanntmachung des Hinweises auf die Patenterteilung: **22.12.1993**
(21) Anmeldenummer: 90119197.3
(22) Anmeldetag: 05.10.1990
(51) Int. Cl.: H02B 1/28

(54) **Elektrotechnisches Gerät**
Electrical device
Dispositif électrotechnique

(30) Priorität: 13.10.1989 DE 3934218
(43) Veröffentlichungstag der Anmeldung: 17.04.1991
(73) Patentinhaber: Barlian, Reinhold, D-97980 Bad Mergentheim (DE)
(72) Erfinder: Barlian, Reinhold, W-6990 Bad Mergentheim (DE); Fischle, Martin, W-6990 Bad Mergentheim (DE); Wehinger, Hans, Dr., W-3304 Wendeburg (DE); Wildschütz, Hans-Joachim, W-3300 Braunschweig (DE)

(56) Entgegenhaltungen:
- DE-A- 3 617 570
- GB-A- 688 948

## Beschreibung

Die Erfindung betrifft ein elektrotechnisches Gerät mit den Merkmalen des Oberbegriffs des Anspruchs 1.

Bekannte elektrotechnische Geräte dieser Art weisen ein Gehäuse auf, in dessen Innenraum elektrische und/oder elektronische Bauteile, wie Kondensatoren, Widerstände, Dioden, Potentiometer, Mikroschalter und dergleichen vorgesehen sein können. Dabei besteht in vielen Anwendungsbereichen zunehmend die Forderung nach einer hohen Sicherheit gegen Zünddurchschlag. Für die Geräteprüfung kann ein beim Zünden eines explosionsfähigen Gemisches im Gehäuse auftretender Überdruck als Bezugsdruck gemessen und zugrundegelegt werden, wobei der Prüfdruck bei einer Stückprüfung dem 1,5-fachen und bei einer Typprüfung dem 4-fachen Bezugsdruck entspricht. Da das Maximum des Explosionsdruckes entscheidend von der Konfiguration des Innenraums des Gehäuses abhängt, mußte zur Erfüllung der hohen prüftechnischen Belastungen bisher ein erheblicher konstruktiver Aufwand erbracht werden.

Aus der DE-A-3617570 ist eine Vorrichtung zur Betätigung von mehreren benachbarten Schaltern bekannt, die auf einer mit elektronischen Bauteilen bestückten Leiterplatte angeordnet und mit dieser in einem nicht druckfest gekapselten Gehäuse gelagert ist, das mit elektrisch isolierendem Sand gefüllt ist, so daß die Explosionsschutzart "Sandkapselung" gegeben ist.

Aus dem GB-A-688948 ist ein flammensicheres Gehäuse bekannt, das dicke Wände aufweist. Am Boden dieses dickwandigen Gehäuses ist ein weiteres Gehäuse befestigt, das aus dünnen Wänden besteht und mit Quarz gefüllt ist. In dem dünnwandigen Gehäuse befindet sich ein Verbinder für zwei in das dünnwandige Gehäuse hineinragende Leitungsenden.

(Fortsetzung ursprüngliche Beschreibung Seite 2, Zeile 1, "Die Aufgabe der Erfindung ...")

Die Aufgabe der Erfindung besteht darin, ein Gerät mit den Merkmalen des Oberbegriffs des Anspruchs 1 dahingehend weiterzubilden, daß mit einfachen Mitteln eine höhere Sicherheit und eine Reduzierung des Bezugs- und Prüfdrucks erzielt wird.

Diese Aufgabe wird erfindungsgemäß durch die kennzeichnenden Merkmale des Anspruchs 1 gelöst.

Zweckmäßige Ausgestaltungen und Weiterbildungen sowie weitere Vorteile und wesentliche Einzelheiten der Erfindung sind den Merkmalen der Unteransprüche und der nachfolgenden Beschreibung zu entnehmen.

Bei dem erfindungsgemäßen elektrotechnischen Gerät ist das Raumvolumen, welches die elektrischen beziehungsweise elektronischen Bauteile umgibt, mit einem Medium angefüllt, welches die Bauteile umgibt und somit die Abstände zwischen den Bauteilen weitgehend ausfüllt. Damit ist das vor dem Einbringen des Mediums bestehende freie Volumen nicht mehr einheitlich, sondern unterbrochen beziehungsweise unterbunden. Außerdem ist das Medium von einer druckfesten Kapselung umgeben, die als äußeres Gehäuse ausgebildet sein kann.

Die druckfeste Kapselung kann bevorzugt im Spritzgußverfahren aus Kunststoff hergestellt sein oder aus einem Metall bestehen, wobei es zweckmäßig sein kann, die Kapselung für die Montage der Bauteile zwei- oder mehrteilig zu gestalten. Nach der Montage der Bauteile werden die Kapselteile so zusammengefügt, daß eine druckfeste Umhüllung gegeben ist.Außerdem kann es günstig sein, eine Einfüllöffnung in der druckfesten Kapselung vorzusehen, durch die das Medium in den Innenraum der Kapsel eingebracht werden kann. Nach dem Auffüllen des Innenraums wird die Einfüllöffnung gegen Zünddurchschlag sicher verschlossen.

Die Bauteile können, unter Berücksichtigung der funktionalen Anforderungen, im wesentlichen beliebig in der druckfesten Kapselung angeordnet sein, das heißt, die Bauteile können verhältnismäßig dicht neben- und übereinander angeordnet werden und auch umittelbar an der Kapselwand anliegen. Die Abstände zwischen den Bauteilen können ausgesprochen klein sein und auch deutlich unter 5 mm, vorzugsweise etwa 0,5 bis 3 mm, betragen, so daß eine hohe Bauteil-Pakkungsdichte und insgesamt eine kleinbauend kompakte und zugleich sehr leistungsstarke Gerätebaueinheit erstellt werden kann. Dazu kann es zweckmäßig sein, für die elektrischen und/oder elektronischen Bauteile in der mit dem Medium angereicherten Kapsel elektrische Leitungen, elektrische Klemmen oder einzelne elektrische Adern an beziehungsweise in der Wandung der druckfesten Kapsel vorzusehen.

Um etwaige Ausdehnungen der Bauteile innerhalb des Füllmediums auffangen zu können, kann es vorteilhaft sein, das die Bauteile umgebende Medium nachgiebig beziehungsweise elastisch auszubilden. Dies kann zweckmäßig dadurch erreicht werden, daß in dem Raum der druckfesten Kapsel und/oder innerhalb des Füllmediums ein freies Restvolumen verbleibt, das als Hohlraum ausgebildet ist. In bevorzugter Ausführung kann das freie Restvolumen beziehungsweise der Hohlraum aus eine/Vielzahl im Medium verteilt angeordneter kleiner Hohlräume bestehen.

Bei einer besonders zweckmäßigen Ausbildung des erfindungsgemäßen Gerätes kann für die Füllung des die Bauteile umgebenden Raumvolumens ein rieselfähiges Medium verwandt werden, das insbesondere aus kleinen Glaskugeln oder Sandkörnern, wie Quarzsand, bestehen kann. Hierbei wird das freie Restvolumen von denjenigen kleinen Hohlräumen gebildet, die sich zwischen den aneinanderliegenden Glaskügelchen oder Sandkörnern befinden. Dadurch wird auf einfache Weise eine weitgehend gleichmäßige Verteilung der Restvolumen-Hohlräume erreicht, wodurch eine weitgehend gleichmäßige Ausdehnung der Bauteile nach allen Seiten innerhalb des Mediums gewährleistet ist.

Bei einer anderen bevorzugten Geräteausführung kann es günstig sein, für das die Bauteile umschließende und von der druckfesten Kapselung umhüllte Medium eine Flüssigkeit vorzusehen, die bevorzugt elektrisch isolierend ist. Die Flüssigkeit kann eine niedrige oder hohe Viskosität aufweisen, wobei innerhalb der Flüssigkeit kleine Luftblasen eingeschlossen sein können, die das freie Restvolumen bilden. Die Luftbläschen können sich ebenfalls gleichmäßig verteilt in der Flüssigkeit befinden. Darüber hinaus kann es günstig sein, eine Flüssigkeit zu verwenden, die sich nach dem Einbringen in die druckfeste Kapselung und dem Umhüllen der Bauteile verfestigt, also zum Beispiel erstarrt, abbindet oder aushärtet. Ein derartig verfestigtes Füllmedium kann etwa die Struktur eines Schwammes oder dergleichen aufweisen. Das sich verfestigende Medium kann auch ein gummi-elastischer Kunststoff, z.B. Silikonkautschuk, sein.

Ein wesentlicher Vorteil des erfindungsgemäßen Gerätes besteht darin, daß eine deutliche Verminderung des Explosionsdrucks im Innenraum und damit des Bezugsdrucks für die Prüfung gegeben ist. Z.B. beträgt der Innen- bzw. Bezugsdruck bei einer vergleichbaren druckfesten Kapselung, deren Innenraum nicht mit einem die Bauteile umgebenden Medium ausgefüllt ist, etwa 7 bar. Der für eine Stückprüfung verlangte 1,5-fache Prüfdruck würde dann 10,5 bar betragen. Für eine Typprüfung müßte der 4-fache Bezugsdruck als Prüfdruck angewandt werden, also 28 bar. Demgegenüber wird gemäß der Erfindung durch die Anordnung des Mediums, wie Sand- oder Glaskugelfüllung, innerhalb der druckfesten Kapselung der beim Zünden eines explosionsfähigen Gemisches entstehende Innen- bzw. Bezugsdruck in der Kapsel um ein Vielfaches herabgesetzt, und zwar etwa um den Faktor 2 - 20, bevorzugt etwa 7, bei den in den Versuchs- und Qualitätsprüfungsreihen verwendeten vergleichbaren Geräten. Das heißt, daß bei einem vergleichbaren erfindungsgemäßen Gerät der Bezugsdruck z.B. 1 bar beträgt, so daß bei der Stückprüfung mit dem 1,5-fachen Bezugsdruck der Prüfdruck nur 1,5 bar beträgt und bei der Typprüfung mit dem 4-fachen Bezugsdruck der Prüfdruck auch nur 4 bar beträgt. Diese überraschende und zudem deutliche Druckreduzierung erlaubt es, die druckfeste Kapselung konstruktiv verhältnismäßig einfach zu gestalten und auf aufwendige Maßnahmen zur Erzielung einer hohen Druckfestigkeit zu verzichten. Somit können mit vorgefertigten Standardgehäusen der druckfesten Kapselung beliebige Formen von inneren Einbauten ohne weiteres ermöglicht werden, ohne daß die Einbauten dem Gehäuse oder das Gehäuse den Einbauten angepaßt werden müssen.

Die Einbauteile können praktisch bis an die Kapselinnenwand gebracht werden, so daß eine optimale Ausnutzung des Innenraumsmöglich ist, wodurch die druckfeste Kapsel äußerst klein und kompakt ausgebildet werden kann. Wenn das Medium, vorzugsweise die Glaskügelchen, in den Innenraum der druckfesten Kapsel eingefüllt worden sind, hat man den inneren Bezugsdruck erheblich herabgesenkt. Diesen inneren Bezugsdruck, wenn also ein Gemisch zur Explosion gebracht wurde, bringt man eigentlich kaum mehr zustande, weil durch die Glaskugelfüllung innen kein ungestörtes Volumen mehr besteht, das nach der Zündung zur Entwicklung und Ausbreitung der Explosion durchgängig vorhanden wäre. Wenn an das erfindungsgemäße Gerät gegenüberliegend zwei Elektroden angesetzt und die Zündung in der Kapsel eingeleitet werden, baut sich die Zündung zwar kurz auf, geht aber einfach nicht durch, weil sie nicht aus einem entsprechend großen Volumen schöpfen kann, sondern immer nur von den übriggebliebenen kleinen Kanälchen, also dem freien Restvolumen, zwischen den Glasperlen zehren kann, so daß sich in der Kapsel auch kein wesentlicher Explosionsdruck aufbauen kann.

Umfangreiche Meßreihen haben eindeutig ergeben, daß das erfindungsgemäße elektrotechnische Gerät technisch sehr zuverlässig ist und eine hohe Sicherheit bietet. In vielen Anwendungsbereichen kann die Einbringung von Glaskügelchen in die druckfeste Kapselung die meisten Vorteile bei den Elektronikbauteilen aufweisen, weil die in sich geschlossen sind und durch die Glaskügelchen in keiner Weise beeinträchtigt werden können. Dadurch, daß die Elektronikbauteile zumeist relativ klein sind und dennoch konzentrierte Leistungsabgaben erbringen können, kann durch die Glaskügelchenfüllung in der druckfesten Kapsel noch der Wirkungsgrad durch Reduzierung der inneren Verlustleistung verbessert werden, da durch die Glaskügelchen eine sehr gute Wärmeverteilung in der druckfesten Kapsel erzielt wird. Dabei muß noch betont werden, daß das Medium,vorzugsweise also die Glaskügelchen, lediglich die Zwischenräume in der druckfesten Kapsel zwischen den Bauteilen ausfüllt, egal wie dick oder dünn die Umhüllung der verschiedenen elektrischen oder elektronischen Bauteile dabei ist. Es müssen also keine Mindestdicken bei der Glaskügelchenfüllung eingehalten werden. Das in die druckfeste Kapselung eingebrachte Medium, vorzugsweise Glaskügelchen, löscht den in den kleinen Zwischenräumen des Mediums sich entwickelnden Explosionsablauf bereits kurz nach der Entstehung und reduziert damit den Explosionsdruck auch im verbleibenden freien Restvolumen, so daß die druckfeste Kapselung in jedem Falle nur mit einem geringen Innendruck beaufschlagt wird. Ein weiterer Vorteil besteht darin, daß bei dem erfindungsgemäßen Gerät auch der Einbau von Betätigungsachsen, wie Drehwellen, Stößeln, mit entsprechenden Spalten ohne weiteres möglich ist. Dabei kann es auch günstig sein, daß die Betätigungsachse mit dem Füllmedium unmittelbar in Berührung steht.

## Patentansprüche

1. Explosionsgeschütztes elektrotechnisches Gerät mit elektrischen und/oder elektronischen Bauteilen, die in einem Raum gelagert sind, einem in dem die Bauteile umgebenden Raumvolumen angereicherten Füllmedium und einem äußeren Gehäuse, dadurch gekennzeichnet, daß das Gehäuse als dem Druck einer inneren Explosion standhaltende und eine Flammenentwicklung von innen nach außen verhindernde druckfeste Kapselung ausgebildet ist und daß das Medium innerhalb der druckfesten Kapselung so angeordnet ist, daß der beim Zünden eines explosionsfähigen Gemisches entstehende Innen-bzw. Bezugsdruck in der Kapsel um ein Vielfaches, etwa 2 bis 20 mal, bevorzugt etwa 7 mal kleiner und die Festigkeit gegen ein Bersten (Berstdruckfestigkeit) der mit dem Medium gefüllten druckfesten Kapselung um ein Vielfaches größer ist als bei einer nicht mit dem Medium gefüllten druckfesten Kapselung.

2. Gerät nach vorstehendem Anspruch, dadurch gekennzeichnet, daß das Füllmedium in dem Raum der druckfesten Kapselung ein freies Restvolumen einschließt.

3. Gerät nach einem oder mehreren der vorstehenden Ansprüche, dadurch gekennzeichnet, daß das freie Restvolumen in dem Medium des druckfest gekapselten Raumes aus bevorzugt verteilt angeordneten kleinen Hohlräumen besteht.

4. Gerät nach einem oder mehreren der vorstehenden Ansprüche, dadurch gekennzeichnet, daß das Medium in dem druckfest gekapselten Raum rieselfähig ist.

5. Gerät nach einem oder mehreren der vorstehenden Ansprüche, dadurch gekennzeichnet, daß das Medium in dem druckfest gekapselten Raum aus kleinen Sandkörnern oder Glaskugeln besteht.

6. Gerät nach einem oder mehreren der vorstehenden Ansprüche, dadurch gekennzeichnet, daß das freie Restvolumen in dem die Bauteile in der druckfesten Kapselung umschließenden Medium von den zwischen den aneinanderliegenden kleinen Hohlräumen gebildet ist.

7. Gerät nach einem oder mehreren der vorstehenden Ansprüche, dadurch gekennzeichnet, daß das freie Restvolumen in der druckfesten Kapselung aus in einer das Medium bildenden Flüssigkeit eingeschlossenen Luftblasen gebildet ist.

8. Gerät nach einem oder mehreren der vorstehenden Ansprüche, dadurch gekennzeichnet, daß das die Bauteile umgebende Medium eine nach dem Einbringen in die druckfeste Kapselung sich verfestigende Flüssigkeit ist.

9. Gerät nach einem oder mehreren der vorstehenden Ansprüche, dadurch gekennzeichnet, daß die die Bauteile und das Füllmedium umschließende druckfeste Kapselung eine nach dem Einfüllen des Mediums zünddurchschlagsicher verschließbare Einfüllöffnung aufweist.

10. Gerät nach einem oder mehreren der vorstehenden Ansprüche, dadurch gekennzeichnet, daß die die Bauteile und das Füllmedium umschließende druckfeste Kapselung aus einem Kunststoff hergestellt und bevorzugt als Spritzgußteil ausgebildet ist.

11. Gerät nach einem oder mehreren der vorstehenden Ansprüche, dadurch gekennzeichnet, daß die die Bauteile und das Füllmedium umschließende druckfeste Kapselung aus einem Metall hergestellt ist.

12. Gerät nach einem oder mehreren der vorstehenden Ansprüche, dadurch gekennzeichnet, daß mindestens eines der Bauteile eine die druckfeste Kapselung und das die Bauteile umschließende Füllmedium durchsetzende Betätigungsachse, insbesondere Drehwelle, Stößel und dergleichen aufweist.

13. Gerät nach einem oder mehreren der vorstehenden Ansprüche, dadurch gekennzeichnet, daß die Schichtdicke des die Bauteile in der druckfesten Kapselung umgebenden Mediums mindestens teilweise kleiner als 5 mm ist.

## Claims

1. Explosion-protected electrical device having electrical and/or electronic components which are stored in a compartment, an enriched filling medium in the volume of space surrounding the components and an external casing, characterised in that the casing is constructed as a pressure-resistant enclosure withstanding the pressure of an internal explosion and preventing a flame propagation from inside to outside and that the medium inside the pressure-resistant enclosure is arranged so that the internal or reference pressure arising in the case of the ignition of an explosive mixture in the casing is smaller by many times, about 2 to 20 times, preferably 7 times and the resistance to a burst (burst strength) of the pressure-resistant casing filled with the medium is greater by many times than with a pressure-resistant enclosure not filled with the medium.

2. Device according to the above Claim, characterised in that the filling medium in the compartment of the pressure-resistant enclosure includes a free residual volume.

3. Device according to one or more of the above Claims, characterised in that the free residual volume in the medium of the pressure-resistant enclosed space consists preferably of small distributed cavities.

4. Device according to one or more of the above Claims, characterised in that the medium in the pressure-resistant enclosed compartment can flow freely.

5. Device according to one or more of the above Claims, characterised in that the medium in the pressure-resistant enclosed spacc consists of small grains of sand or glass spheres.

6. Device according to one or more of the above Claims, characterised in that the free residual volume in the medium surrounding the components in the pressure-resistant enclosure is formed by the small cavities lying against each other.

7. Device according to one or more of the above Claims, characterised in that the free residual volume in the pressure-resistant enclosure is formed by air bubbles enclosed in a liquid forming the medium.

8. Device according to one or more of the above Claims, characterised in that the medium surrounding the components is a liquid which solidifies after it is introduced into the pressure-resistant enclosure.

9. Device according to one or more of the above Claims, characterised in that the pressure-resistant enclosure surrounding the components and the filling medium has a flameproof filling opening which can be sealed after the filling of the medium.

10. Device according to one or more of the above Claims, characterised in that the pressure-resistant enclosure surrounding the components and the filling medium is manufactured from a synthetic material and is preferably constructed as an injection-moulded part.

11. Device according to one or more of the above Claims, characterised in that the pressure-resistant enclosure surrounding the components and the filling medium is manufactured from a metal.

12. Device according to one or more of the above Claims, characterised in that at least one of the components has an operating axle, especially a torque shaft, plunger and the like passing through the filling medium surrounding the components.

13. Device according to one or more of the above Claims, charecterised in that the coating thickness of the medium surrounding the components in the pressure-resistant enclosure is at least partially less than 5 mm.

## Revendications

1. Appareil de type antidéflagrant électrotechnique comportant des composants électriques et/ou électroniques logés dans un volume garni d'un matériau de remplissage concentré et entouré d'un boîtier, caractérisé en ce que le boîtier est constitué par une enveloppe résistant à la pression interne développée par une explosion et empêchant la propagation du feu de l'intérieur à l'extérieur, le matériau de remplissage est réparti à l'intérieur de l'enveloppe résistant à la pression de sorte que dans le cas de l'allumage d'un mélange détonant, la pression interne engendrée dans l'enveloppe est divisée par un facteur compris entre 2 et 20, de préférence 7 environ, la résistance à l'éclatement (par pression) de l'enveloppe garnie du matériau de remplissage est plusieurs fois supérieure à celle d'une enveloppe résistant à la pression mais non garnie.

2. Appareil selon la revendication 1, caractérisé en ce que le matériau de remplissage contenu à l'intérieur de l'enveloppe inclut un volume résiduel libre.

3. Appareil selon une ou plusieurs des revendications précédentes, caractérisé en ce que le volume résiduel libre contenu à l'intérieur du matériau de remplissage de l'enveloppe résistante est constitué de plusieurs petits volumes creux, répartis de préférence.

4. Appareil selon une ou plusieurs des revendications précédentes, caractérisé en ce que le matériau de remplissage peut circuler à l'intérieur de l'enveloppe, résistant à la pression.

5. Appareil selon une ou plusieurs des revendications précédentes, caractérisé en ce que le matériau contenu dans l'enveloppe est constitué de grains de sable ou de billes de verre.

6. Appareil selon une ou plusieurs des revendications précédents, caractérisé en ce que le volume résiduel libre à l'intérieur du matériau de remplissage de l'enveloppe résistant à la pression est constitué de petits volumes creux juxtaposés.

7. Appareil selon une ou plusieurs des revendication précédentes, caractérisé en ce que le volume résiduel libre à l'intérieur de l'enveloppe résistant à la pression est constitué de bulles d'air incluses dans un liquide constituant le matériau de remplissage.

8. Appareil selon une ou plusieurs des revendications précédentes, caractérisé en ce que le matériau entourant les composants est constitué d'un liquide se solidifiant après son introduction dans l'enveloppe résistant à la pression.

9. Appareil selon une ou plusieurs des revendications précédentes, caractérisé en ce que l'enveloppe résistant à la pression enfermant les composants et le matériau de remplissage présente une ouverture de remplissage qui, après usage, constitue une sécurité contre le passage d'une étincelle.

10. Appareil selon une ou plusieurs des revendications précédentes, caractérisé en ce que l'enveloppe résistant à la pression enfermant les composants et le matériau de remplissage est réalisée en matière plastique, par injection de préférence.

11. Appareil selon une ou plusieurs des revendications précédentes, caractérisé en ce que l'enveloppe résistant à la pression enfermant les composants et le matériau de remplissage est réalisée en métal.

12. Appareil selon une ou plusieurs des revendications précédentes, caractérisé en ce qu'au moins un des composants présente un organe actif, en particulier un arbre tournant, un poussoir ou autre organe traversant l'enveloppe résistant à la pression ainsi que le matériau de remplissage entourant les composants.

13. Appareil selon une ou plusieurs des revendications précédentes, caractérisé en ce que l'épaisseur de la couche de matériau de remplissage entourant les composants à l'intérieur de l'enveloppe résistant à la pression est, au moins à certains endroits, inférieure à 5 mm.
